# EUROPÄISCHE PATENTSCHRIFT

(11) **EP 1 030 564 B1**
(45) Veröffentlichungstag und Bekanntmachung des Hinweises auf die Patenterteilung: **25.06.2003**
(21) Anmeldenummer: 98948661.8
(22) Anmeldetag: 28.10.1998
(51) Int. Cl.: A23G 3/00

(54) **SNACK AUS KÜRBISKERNEN**
CONFECTIONERY MADE FROM PUMPKIN SEEDS
ARTICLE DE CONFISERIE A BASE DE GRAINES DE COURGE

(30) Priorität: 16.11.1997 CH 263497
(43) Veröffentlichungstag der Anmeldung: 30.08.2000
(73) Patentinhaber: Hunkeler, Peter, 6036 Dierikon (CH)
(72) Erfinder: Hunkeler, Peter, 6036 Dierikon (CH)
(74) Vertreter: Volpert, Marcus, Dr.
(86) Internationale Anmeldenummer: CH9800458
(87) Internationale Veröffentlichungsnummer: WO99025202

(56) Entgegenhaltungen:
- EP-A- 0 348 196
- DD-A- 103 552
- FR-A- 2 624 700
- DATABASE WPI Derwent Publications Ltd., London, GB; AN 98-133409 XP002093207 & HU 75 837 A (MAKAI), 28. Mai 1997

## Beschreibung

Die Erfindung bezieht sich auf einen Snack nach dem Oberbegriff des Patentanspruchs 1.

Ein solcher Snack ist insbesondere von Jahrmärkten bekannt und umfasst einzelne, mit einer Zuckerlösung überzogene Kürbiskerne. Die Zuckerlösung oder -masse ist beispielsweise von der Herstellung gebrannter Mandeln seit vielen Jahren bekannt.

Der Zuckerüberzug bei dem bekannten Snack auf Kürbiskernbasis lässt sich nur wenig abwandeln, so dass eine geschmackliche Variation des angebotenen Snacks kaum möglich ist.

Aus der FR-A-2 624 700 ist eine Grundmasse bekannt, welche u. a. Kürbissamen enthält und mit einem Schokoladenüberzug versehen ist. Gemäss dem Verfahren zum Herstellen der Grundmasse bzw. des Produktes ergibt sich aus diesem Dokument, dass das den Kürbissamen enthaltende Gemisch zu einem Pulver zerrieben bzw. zerkleinert wird und der aus dem Pulver hergestellte Riegel mit Schokolade überzogen werden kann.

Aus der EP-A1-0 348 196 ist ein Nahrungsmittelprodukt bekannt, das essbare Nahrungsmittelstücke aufweist, welche durch ein Bindemittel zusammengehalten sind. Ein typisches Beispiel für ein solches Nahrungsmittelprodukt ist ein sogenannter Granola-Riegel. Granola ist gemäss dem letztgenannten Dokument allgemein definiert als ein Gemisch aus gerösteten Körnern, Nüssen, Kernen und normalerweise getrockneten Früchten. Die in der Granolä-Masse verwendeten Kerne sind beispielsweise Kürbiskerne. Das aus diesem Dokument bekannte Nahrungsmittelprodukt kann mit verschiedenen Arten von Überzügen, beispielsweise auch mit Schokolade, überzogen sein. Das Bindemittel umfasst etwa 5 bis etwa 100 Prozent an kalorienarmen Fettsubstituenten, wie beispielsweise Saccharose und andere Zucker, Mehl, Honig.

Der Erfindung liegt die Aufgabe zugrunde, einen Snack der eingangs erwähnten Art zu schaffen, welcher einerseits gut schmeckt und andererseits kalorienarm ist.

Diese Aufgabe wird erfindungsgemäss durch einen Snack mit den Merkmalen des Patentanspruchs 1 gelöst.

Vorteilhaft ist dabei, dass Schokolade von vielen Menschen gern verzehrt wird und dass die Herstellung von Schokolade unterschiedliche Geschmacksrichtungen auf einfache Weise zulässt. So kann die Schokolade beispielsweise eine Vollmilchschokolade oder eine Halbbitterschokolade oder eine Zartbitterschokolade sein. Gleichzeitig ist der erfindungsgemässe Snack gesund, da Kürbiskerne wertvolle Fettsäuren, Vitamine, Mineralstoffe und Spurenelemente enthalten.

Erfindungsgemäss weist der Überzug eine erste Schicht zum Zusammenballen mehrerer Kürbiskerne und eine zweite, die erste Schicht zumindest teilweise umgebende Schicht aus Schokolade auf, wobei die erste Schicht des Überzugs eine herunterschluckbare Kaugummimasse, bevorzugt ohne Zucker, oder ein Brotteig, bevorzugt in Form einer Dauerbackware, wie beispielsweise Knäckebrot, ist. Diese Weiterbildung der Erfindung ermöglicht ein weitgehend ökologisches Produkt, da bei einem Zusammenballen mehrerer Kürbiskerne mittels der ersten Schicht und einem Überziehen dieser ersten durch eine zweite Schicht aus Schokolade pro Kürbiskern weniger Kalorien hinsichtlich des Überzugs aus Schokolade als bei einzeln mit Schokolade umhüllten Kernen aufgenommen werden. Ein herkömmliche Snack, bei welchem die Kürbiskerne einzeln mit einer süssen Masse umgeben sind, ergibt beim Verzehr pro Masseneinheit an Kürbiskernen eine im Vergleich zum erfindungsgemässen Snack dieser Weiterbildung beträchtlich erhöhte Kalorienzufuhr. Erfindungsgemäss wird also ein Snack geschaffen, der die Vorteile eines guten Geschmacks mit denen einer biologischen/ökologischen Ernährung verbindet.

Die Kalorienaufnahme durch den erfindungsgemässen Snack lässt sich vorteilhafterweise weiter dadurch reduzieren, dass die Dicke der zweiten Schicht, also die Schokoladenschicht, geringer als diejenige der ersten Schicht des Überzugs ausgebildet ist.

Gemäss einer anderen Weiterbildung der Erfindung weist der Schokoladenüberzug weitere Kürbiskerne auf. Ein solches Produkt hat den Vorteil, dass der Käufer die Kürbiskerne in der Schokoladenschicht frühzeitig erkennen und dadurch von sich aus ein Produkt auswählen kann, das sich geschmacklich von bisher auf dem Markt bekannten Produkten auf der Basis von Nüssen oder Mandeln weitgehend unterscheidet.

Gemäss einer besonders bevorzugten Ausführungsform der Erfindung enthalten die Kürbiskerne Kürbissamen der Zuchtsorte Cucurbita pepo L. convar. citrullinina I. GREB. var. styriaca I. GREB. Derartige Kürbiskerne sind speziell für medizinische Zwecke gezüchtet und stellen ein Naturprodukt aus ökologisch kontrolliertem Anbau dar. Es ist bekannt, dass derartige Kürbiskerne Prostatabeschwerden bei Männern sowie Blasenschwächen bei Männern und Frauen entgegenwirken. Mit der letztgenannten Weiterbildung der Erfindung lässt sich demnach ein Snack schaffen, welcher auf pflanzlicher Basis körperlichen Beschwerden entgegenwirkt und gleichzeitig gut schmeckt.

Die Schokolade ist bevorzugt aus ökologisch angebauten Zutaten hergestellt und vorzugsweise eine sogenannte Havelaar-Schokolade. Damit lässt sich der erfindungsgemässe Snack vollkommen auf ökologischer Basis herstellen. Durch die Verwendung der Havelaar-Schokolade werden darüber hinaus Kakaobauern unterstützt, die für ihre Arbeit einen gerechten Lohn erhalten.

Ausführungsbeispiele des Erfindungsgegenstandes werden nachfolgend an Hand der Zeichnung näher erläutert. Es zeigen:
- Fig. 1: eine schematische, teilweise geschnittene Ansicht einer ersten Ausführungsform eines Snacks aus Kürbiskernen; und
- Fig. 2: eine schematische, teilweise geschnittene Ansicht einer zweiten Ausführungsform eines Snacks aus Kürbiskernen.

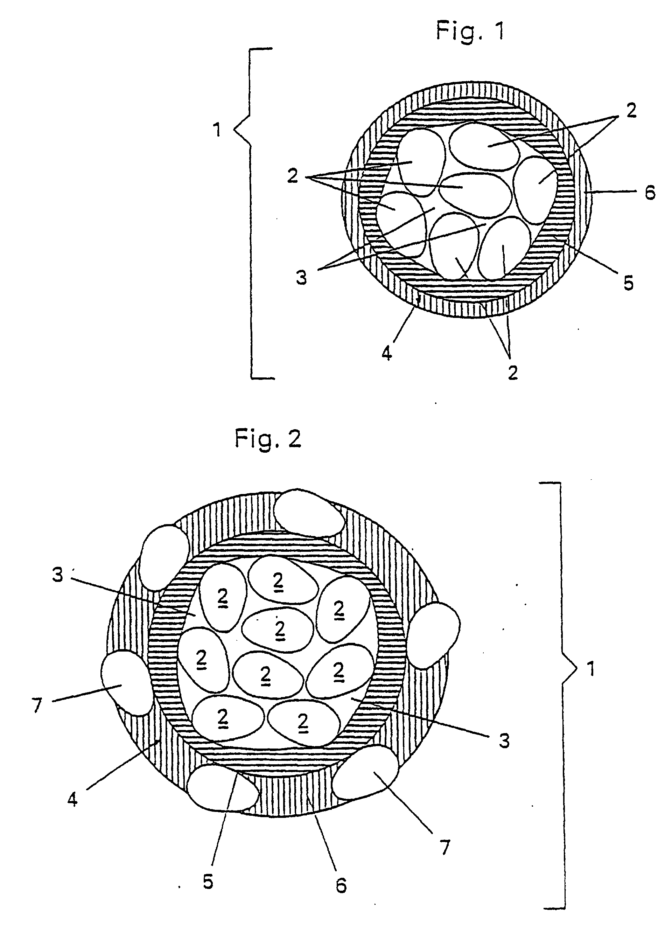

Bei der ersten Ausführungsform des Snacks 1 gemäss Fig. 1 sind mehrere Kürbiskerne 2 zusammengeballt. Diese liegen unter Belassung von Zwischenräumen 3 teilweise aneinander an. Diese Zusammenballung von Kürbiskernen 2 ist umgeben von einem Überzug 4, welcher gemäss Fig. 1 aus einer ersten, inneren Schicht 5 und einer diese umgebenden, zweiten, äusseren Schicht 6 besteht. Die innere Schicht 5 des Überzugs 4 dient zum Zusammenballen der Kürbiskerne 2. Sie kann entfallen, wenn auf andere Weise, z. B. durch ein wenigstens teilweises Ausfüllen der Zwischenräume 3 mit dem hier in bezug auf die erste Schicht genannten Material, ein Zusammenballen mehrerer, zumindest teilweise aneinander anliegender Kürbiskerne 2 für deren Umhüllung mittels der äusseren Schicht 6 sichergestellt ist. Erfindungsgemäss enthält der Überzug 4 Schokolade..Sofern ein kalorienärmeres Produkt gewünscht wird, kann die äussere Umgebungsfläche der Kürbiskerne 2 auch nur teilweise von dem Schokoladenüberzug umgeben sein. Kürbissamen in Form von Kürbiskernen enthalten von Natur aus einen hohen Anteil an wichtigen Stoffen, die sich positiv auf den menschlichen Organismus auswirken und Krankheiten vorbeugen können. Kürbiskerne der Zuchtsorte Cucurbita pepo L. convar. citrullinina I. GREB. var. styriaca I. GREB., nachfolgend Steyrische Kürbiskerne genannt, enthalten vor allem mehrfach ungesättigte Fettsäuren, so zum Beispiel Linolsäure, Vitamin E, wichtige Mineralstoffe, wie zum Beispiel Magnesium, und Spurenelemente, wie zum Beispiel Selen. Sie beeinflussen sogar Funktionsstörungen der Blase bei Männern und Frauen sowie der Prostata vorteilhaft. Ausserdem enthalten die vorgenannten Kürbiskerne Delta-7-Sterole, welche in der Pflanzenwelt nur selten vorkommen. 100 g derartiger Kürbiskerne enthalten
- etwa 45 g Kürbiskernöl, davon ca. 40 % die mehrfach ungesättigte Fettsäure Linolsäure,
- etwa 38 g Eiweiss,
- etwa 4 g Kohlenhydrate,
- etwa 5 g Mineralstoffe und Spurenelemente, davon etwa 1 g Kalium und etwa 0,5 g Magnesium.

Erfindungsgemäss bestehen die Kürbiskerne 2 aus ganzen, schalenlosen Kernen. Der Snack 1 ist damit unmittelbar zum Verzehr geeignet.

Wie bereits zuvor angedeutet, dient die erste Schicht 5 des Überzugs 4 dem Zusammenballen mehrerer Kürbiskerne 2. Die zweite Schicht 6, welche die erste Schicht 5 gemäss Fig. 1 vollständig umgibt, besteht aus Schokolade.

Erfindungsgemäss werden für die erste Schicht 5 mehrere Varianten vorgeschlagen. Gemäss einem ersten Ausführungsbeispiel besteht die erste Schicht 5 bei einem ökologischen Ausführungsbeispiel aus einer herunterschluckbaren Kaugummimasse ohne Zucker oder aus einem Brotteig in Form einer Dauerbackware, wie beispielsweise Knäckebrot. Die beiden letztgenannten Ausführungsbeispiele für die erste Schicht 5 führen dem Organismus beim Verzehr nur wenige Kalorien zu, so dass diese Ausführungsbeispiele für Personen geeignet sind, welche besonders auf eine reduzierte Kalorienaufnahme achten und trotzdem ein schmackhaftes und, zumindest was die Kürbiskerne betrifft, gesundes Produkt zu sich nehmen wollen.

In Fig. 1 sind die Dicken der ersten und der zweiten Schicht 5, 6 etwa gleich stark ausgebildet. Um die Kalorienaufnahme weiter zu begrenzen, ist es gemäss einer nicht näher gezeigten Ausführungsform der Erfindung möglich, die Dicke der zweiten Schicht 6, also die Schokoladenschicht, geringer als diejenige der ersten Schicht 5 des Überzugs 4 auszubilden.

Eine zweite Ausführungsform der Erfindung ist schematisch in Fig. 2 dargestellt. Diese Ausführungsform entspricht, was die Kürbiskerne 2 und die erste Schicht 5 betrifft, der in Fig. 1 gezeigten Ausführungsform. Unterschiede ergeben sich jedoch hinsichtlich der Ausbildung der zweiten Schicht 6, da diese weitere Kürbiskerne 2 enthält. Aus Fig. 2 ist ersichtlich, dass diese zusätzlichen Kürbiskerne vollständig von der Schokoladenschicht bedeckt sein oder aus dieser teilweise hervorstehen können.

Bei der letztgenannten Ausführungsform ist ein Teil der Schokolade also durch weitere Kürbiskerne ersetzt, so dass die zweite Schicht dieser Ausführungsform weniger Kalorien als eine gleichgrosse zweite Schicht der ersten Ausführungsform enthält.

Gemäss einer bevorzugten Weiterbildung der Erfindung ist die Schokolade aus ökologisch angebauten Zutaten hergestellt und vorzugsweise eine sogenannte Havelaar-Schokolade. Mit dem Kauf des erfindungsgemässen Snacks wird damit ein ökologischer und auch ein sozialer Beitrag geleistet, da die betreffenden Kakaobauern einen gerechten Lohn für ihr Produkt erhalten.

Es ist klar, dass die Erfindung nicht auf einen Snack mit den zuvor beschriebenen Steyrischen Kürbiskernen beschränkt ist. Es können auch andere schalenlose Kürbiskerne zum Einsatz kommen.

Der erfindungsgemässe Snack ist schmackhaft und enthält gesunde Produkte. Er wird deshalb im Markt auf reges Interesse stossen.

## Patentansprüche

1. Snack umfassend schalenlose, mit einem Schokolade enthaltenden Überzug (4) versehene Kürbiskerne (2), wobei der Überzug (4) eine erste Schicht (5) zum Zusammenballen mehrerer, ganzer Kürbiskerne (2) und eine zweite, die erste Schicht (5) zumindest teilweise umgebende Schicht (6) aus Schokolade aufweist und die erste Schicht (5) des Überzugs (4) eine herunterschluckbare Kaugummimasse oder ein Brotteig ist.

2. Snack nach Anspruch 1, **dadurch gekennzeichnet, dass** die Kaugummimasse ohne Zucker hergestellt ist.

3. Snack nach Anspruch 1, **dadurch gekennzeichnet, dass** der Brotteig in Form einer Dauerbackware, wie beispielsweise Knäckebrot, hergestellt ist.

4. Snack nach einem der Ansprüche 1 bis 3, **dadurch gekennzeichnet, dass** die Dicke der zweiten Schicht (6) geringer als diejenige der ersten Schicht (5) des Überzugs (4) ausgebildet ist.

5. Snack nach einem der Ansprüche 1 bis 4, **dadurch gekennzeichnet, dass** der Schokoladenüberzug weitere Kürbiskerne (7) aufweist.

6. Snack nach einem der vorhergehenden Ansprüche, **dadurch gekennzeichnet, dass** die Kürbiskerne Kürbissamen der Zuchtsorte Cucurbita pepo L. convar. citrullinina I. GREB. var. styriaca I. GREB. enthalten.

## Claims

1. Snack comprising peeled pumpkin seeds with a coating containing chocolate, whereby the coating (4) shows a first layer (5) of an agglutination of several whole pumpkin seeds (2) covered by a second layer (6), which is made of chocolate. The second layer (6) should at least partially surround the first layer (5) of coating (4). The first layer (5) of coating (4) is made of a mass of edible chewing gum or dough.

2. Snack according to Claim 1 is so **characterised that** the chewing gum is manufactured without the use of sugar.

3. Snack according to Claim 1 is so **characterised that** the dough is manufactured in the form of a long shelf-life pastry article as for example crisp bread.

4. Snack according to Claims 1 to 3 is so **characterised that** the thickness of the second layer (of the coating) (6) is less pronounced than that of the first layer (5) of coating (4).

5. Snack according to Claims 1 to 4 is so **characterised that** the chocolate coating contains additional pumpkin seeds (7).

6. Snack according to previous claims is so **characterised that** the pumpkin seeds contain pumpkin seeds of the variety: Cucurbita pep L. convar. citrullinina I. GREB. var. styriaca I. GREB.

## Revendications

1. Snack comprenant des graines de citrouille (2) sans écorce, avec couverture (4) contenant du chocolat, la couverture (4) se composant d'une première couche (5) destinée à agglutiner plusieurs graines de citrouille entiers (2) et d'une deuxième couche en chocolat (6) couvrant au moins partiellement la première couche (5) de la couverture (4) consistant en une masse élastique ou une pâte à pain comestible.

2. Snack conforme à la spécification 1, avec la particularité que la masse élastique est fabriquée sans sucre.

3. Snack conforme à la spécification 1, avec la particularité que la pâte à pain est fabriquée sous forme de pâtisserie durable, comme les biscottes suédoises, par exemple.

4. Snack conforme à une des spécifications 1 à 3, avec la particularité que l'épaisseur de la deuxième couche (6) est moins épaisse que celle de la première couche (5) de la couverture (4).

5. Snack conforme à une des spécifications 1 à 4, avec la particularité que la couverture de chocolat comprend d'autres graines de citrouille.

6. Snack conforme à l'une des spécifications précédentes, avec la particularité que les graines de citrouille contiennent des semences de citrouille de la marque de culture Cucurbita pepo L. convar. citrullinina I. GREB. var. styriaca I. GREB.
